# EUROPÄISCHE PATENTSCHRIFT

(11) **EP 2 582 953 B1**
(45) Veröffentlichungstag und Bekanntmachung des Hinweises auf die Patenterteilung: **01.06.2016**
(21) Anmeldenummer: 11710743.3
(22) Anmeldetag: 22.03.2011
(51) Int. Cl.: F02B 37/16, F04D 25/04, F04D 27/00, F16K 31/383, F16K 31/40

(54) **SCHUBUMLUFTVENTIL FÜR VERBRENNUNGSKRAFTMASCHINEN**
AIR BYPASS VALVE FOR INTERNAL COMBUSTION ENGINES
VANNE DE DÉRIVATION D'AIR POUR MOTEURS À COMBUSTION INTERNE

(30) Priorität: 18.06.2010 DE 102010024297
(43) Veröffentlichungstag der Anmeldung: 24.04.2013
(73) Patentinhaber: Pierburg GmbH, 41460 Neuss (DE)
(72) Erfinder: ZURKE, Janusz, 47638 Straelen (DE); HERMANN, Max, 41468 Neuss (DE)
(74) Vertreter: Patentanwälte ter Smitten Eberlein Rütten Partnerschaftsgesellschaft
(86) Internationale Anmeldenummer: PCT/EP2011/054301
(87) Internationale Veröffentlichungsnummer: WO 2011/157457

(56) Entgegenhaltungen:
- DE-A1-102005 028 141
- DE-A1-102005 051 937

## Beschreibung

Die Erfindung betrifft ein Schubumluftventil für Verbrennungskraftmaschinen, welche in einem Bypasskanal zwischen der Druckseite und der Saugseite einer Aufladeeinrichtung angeordnet ist, das ein Gehäuse aufweist, mit einem Bypassventil, das einen pneumatisch betätigbaren ersten Ventilverschlusskörper aufweist, der in Schließrichtung durch eine Federkraft vorgespannt ist, mit einem Steuerdruckraum, der über eine ständig geöffnete Ausgleichsöffnung im geschlossenem Zustand des Bypassventils mit der Druckseite verbunden ist, und mit einem Elektromagnetventil, das einen Spulenkörper, eine Rückschlussanordnung und einen, ebenfalls in Schließrichtung vorgespannten Anker und einen damit zusammenwirkenden, zweiten Ventilverschlusskörper für mindestens eine Steueröffnung aufweist, wobei der Gesamtquerschnitt der Steueröffnung/en größer als der Querschnitt der Ausgleichsöffnung ist, wobei der Steuerdruckraum bei geöffnetem zweiten Ventilverschlussglied über die Steueröffnung mit der Saugseite verbunden ist, wobei durch Bestromen des Elektromagnetventils während des Öffnungsvorgangs des Bypassventils eine fluidische Verbindung zwischen der Druckseite und der Saugseite der Aufladeeinrichtung oder der Atmosphäre über den Steuerdruckraum herstellbar ist.

Schubumluftventile zur Rezirkulation von verdichtetem Verbrennungsgas von der Druckseite eines Verdichters eines Turboladers zurück zur Saugseite des Verdichters sind als Schubumluftventilvorrichtungen hinlänglich bekannt. Die Verbindung zwischen der Druckseite und der Saugseite des Verdichters durch eine Bypassleitung wird für den Übergang von einer hohen Last in den Schubbetrieb der Verbrennungskraftmaschine benötigt, um eine hohe Förderung der Ladedruckpumpe gegen eine geschlossene Drosselklappe und den daraus entstehenden Pumpeffekt sowie ein zu starkes plötzliches Absenken der Turbodrehzahl mit den Folgen thermodynamischer Probleme zu verhindern.

Schubumluftventile werden häufig elektromagnetisch betätigt, wobei der Ventilverschlusskörper des Ventils durch die elektromagnetische Kraft bewegt wird. Ein Beispiel einer solchen Anordnung wird in der DE 100 20 041 A1 beschrieben. Die Ansteuerung erfolgt über eine Steuereinheit entsprechend vorhandener Motordaten. Das Ventil weist eine Druckausgleichsöffnung am Ventilverschlusskörper auf, wodurch bei entsprechender Auslegung der wirksamen Flächen ein Kräftegleichgewicht bezüglich der pneumatischen Kräfte hergestellt wird. Nachteilig an diesen Ventilen ist jedoch die trotz der Druckausgeglichenheit des Ventils hohe erforderliche Stellkraft zur Betätigung des Ventilverschlusskörpers beim Öffnen, wodurch insbesondere bei großen zu schaltenden Querschnitten große Elektromagnete verwendet werden müssen. Gleichzeitig bestehen Beschränkungen bezüglich der erreichbaren Öffnungszeiten.

Zur Verringerung der notwendigen Magnetkraft wird in der DE 102 51 981 A1 vorgeschlagen, ein pneumatisch betätigtes Schubumluftventil vorzusehen, dessen Steuerdruckraum über ein Elektromagnetventil mit der Saugseite des Verdichters verbindbar ist. Dies führt zu einer Öffnung des Ventils. Die dafür verantwortliche Druckdifferenz sinkt jedoch im geöffneten Zustand, so dass ein ungewolltes Schließen des Ventils erfolgen kann.

Des Weiteren wird in der DE 10 2005 028 141 A1 ein Bypassventil für Verbrennungskraftmaschinen beschrieben, bei dem eine Öffnung des Ventilverschlusskörpers dadurch erzeugt wird, dass elektromagnetisch eine Dichtplatte von Öffnungen abgehoben wird, über die eine fluidische Verbindung des Steuerdruckraums zur Saugseite des Verdichters herstellbar ist. Zusätzlich besteht eine ständige Verbindung zwischen dem Steuerdruckraum und der Druckseite über eine Druckausgleichsöffnung im Ventilverschlusskörper. Da diese jedoch vom Querschnitt kleiner ist als die Öffnungen zur Saugseite, entsteht eine Kraft in Öffnungsrichtung, die zum Öffnen des Ventilverschlusskörpers führt. Jedoch liegt der Ventilverschlusskörper im geöffneten Zustand wieder an der Dichtplatte an, so dass sich ein Druckgleichgewicht am Ventilverschlusskörper einstellt. Dies kann zu einem ungewollten Schließen des Ventils aufgrund einer in Schließrichtung wirkenden Federkraft führen. Anschließend baut sich der Druck wieder auf, so dass das Ventil aufgrund der Druckdifferenz wieder öffnet. Es entsteht ein Regelkreis mit sich öffnendem und schließendem Ventil, was zu erhöhtem Verschleiß führt.

Aufgabe der vorliegenden Erfindung ist es daher, ein Schubumluftventil zu schaffen, mit der die oben genannten Nachteile vermieden werden, eine definierte Position des Ventilverschlusskörpers bei betätigtem Elektromagneten sichergestellt wird, wobei ein möglichst einfacher Aufbau gewährleistet sein soll.

Diese Aufgabe wird durch den kennzeichnenden Teil des Hauptanspruchs gelöst.

Dadurch, dass ein erstes Federorgan für den ersten Ventilverschlusskörper und ein zweites Federorgan für den zweiten Ventilverschlusskörper vorgesehen sind, wobei die mindestens eine Steueröffnung an der der Ausgleichsöffnung gegenüber gelegenen Seite des Elektromagnetventils angeordnet ist, derart, dass im vollständig geöffneten Zustand des Bypassventils zumindest zeitweise eine fluidische Verbindung zwischen der Druckseite und der Saugseite der Aufladeeinrichtung über den Steuerdruckraum besteht, wobei ein Verschluss der fluidischen Verbindung eine resultierende Kraft in Schließrichtung bewirkt, wodurch erreicht wird, dass das Bypassventil definiert geöffnet und geschlossen werden kann. Ein unerwünschtes Schließen oder Pulsieren des Ventilverschlusskörpers wird zuverlässig vermieden. Gleichzeitig ist ein einfacher und damit kostengünstiger Aufbau des Schubumluftventils gewährleistet.

Vorzugsweise weist der Spulenkörper die Steueröffnung auf. Hierdurch wird auf einfache Weise eine innere Durchströmung des Schubumluftventils ermöglicht. Das zweite Federorgan kann sich in vorteilhafter Weise an der Rückschlussanordnung abstützten.

Aus fertigungstechnischer Sicht ist es besonders vorteilhaft, wenn der Anker als im Wesentlichen einseitig offener Zylinder ausgebildet ist, an dessen Grundfläche der zweite Ventilverschlusskörper ausgebildet ist. Ferner ist es vorteilhaft, wenn ein Elektromagnetventilgehäuse mit einem Befestigungsorgan vorgesehen ist, dass im Gehäuse abgedichtet angeordnet ist. Hierbei kann das Elektromagnetventilgehäuse mittels des Befestigungsorgans verklemmt sein. In vorteilhafter Weise kann sich das erste Federorgan am Befestigungsorgan abgestützten.

Dadurch, dass das Gehäuse ein Abschlussorgan aufweist, das das Elektromagnetventilgehäuse in Axialrichtung fixiert, ist eine besonders einfache Montage des Schubumluftventils möglich.

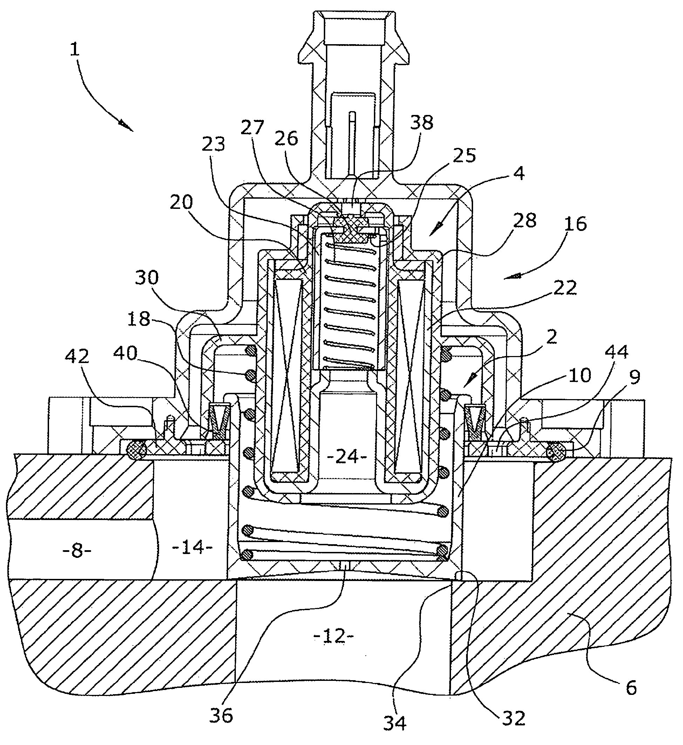

Ein Ausführungsbeispiel ist in den Zeichnungen dargestellt Hierbei zeigt die einzige Figur eine Schnittansicht eines erfindungsgemäßen Schubumluftventils.

Das erfindungsgemäße Schubumluftventil 1 weist im Wesentlichen ein Gehäuse 16 auf, in dem ein Bypassventil 2, ein Elektromagnetventil 4 und ein Steuerdruckraum 24 angeordnet sind. Das Schubumluftventil 1 ist direkt an ein kanalbildendes Gehäuse 6 eines als Rezirkulationskanal dienenden Bypasskanals 8 einer nicht näher dargestellten Aufladeeinrichtung eines Abgasturboladers unter Zwischenlage einer Dichtung 9 angeflanscht. Der Rezirkulations- beziehungsweise Bypasskanal 8 kann entweder direkt im Gehäuse der Aufladeeinrichtung oder als externer Kanal ausgebildet sein.

Das Bypassventil 2 besitzt einen pneumatisch betätigbaren ersten Ventilverschlusskörper 10, der eine Druckseite 12, auf der der Ventilverschlusskörper 10 aufliegt von einer seitlich anliegenden Saugseite 14 des Rezirkulationskanals 8 der Aufladeeinrichtung trennt. Der erste Ventilverschlusskörper 10 ist durch ein erstes Federorgan 18 in Schließrichtung vorgespannt.

Der Ventilverschlusskörper 10 liegt mit einer Dichtlippe 32 auf einem im Gehäuse 6 ausgebildeten Ventilsitz 34 im geschlossenen Zustand auf. Desweiteren weist der Ventilverschlusskörper 10 mindestens eine ständig geöffnete definierte Ausgleichsöffnung 36 auf, über die der Steuerdruckraum 24 im geschlossenen Zustand mit der Druckseite 12 verbunden ist. Dies hat zur Folge, dass im Steuerdruckraum 24 bei geschlossenem Ventilgehäuse 16 der gleiche Druck wirkt wie auf der Druckseite 12 unterhalb des Ventilverschlusskörpers 10. Auf diese Weise ist das Bypassventil 2 im geschlossenen Zustand bezüglich der pneumatischen Kräfte im Wesentlichen kraftausgeglichen. Daraus folgt, dass das Bypassventil 2 durch die anliegende Federkraft des ersten Federorgans 18 im geschlossenen Zustand gehalten wird.

Um das Bypassventil 2 auch öffnen zu können, ist im Gehäuse desweiteren das Elektromagnetventil 4 vorgesehen, das einen Spulenkörper 20, eine Rückschlussanordnung 22 und einen, ebenfalls in Schließrichtung vorgespannten Anker 23 und einen damit zusammenwirkenden, zweiten Ventilverschlusskörper 26 für mindestens eine Steueröffnung 38 aufweist. Diese Steueröffnung ist im vorliegenden Ausführungsbeispiel im Spulenkörper 20 vorgesehen, wobei der Querschnitt der Steueröffnung 38 größer ist als der Querschnitt der Ausgleichsöffnung 36.

Der Anker 23 ist im Wesentlichen als einseitig offener Zylinder ausgebildet ist, an dessen Grundfläche 25 der zweite Ventilverschlusskörper 26 ausgebildet ist. Ein zweites Federorgan 27 übt eine Federkraft in Schließrichtung auf den Anker und damit auf den zweiten Ventilverschlusskörper aus und stützt sich an der Rückschlussanordnung des Elektromagnetventils ab.

Das Elektromagnetventil 4 weist darüber hinaus ein Elektromagnetventilgehäuse 28 mit einem einteilig verbundenen Befestigungsorgan 30 auf, dass im vorliegendem Ausführungsbeispiel abgedichtet im Gehäuse 16 verklemmt ist. Das Befestigungsorgan 30 bietet so auch die Abstützfläche für das erste Federorgan 18. Desweiteren ist im Befestigungsorgan 30 eine Dichtung 40 für den ersten Ventilverschlusskörper 10 gelagert. Der Steuerdruckraum 24 wird folglich begrenzt durch den Innenraum des ersten Ventilverschlusskörpers 10, dem Raum zwischen Befestigungsorgan 30 und Außenfläche des Elektromagnetventilgehäuses 28 sowie dem Innenraum des Elektromagnetventils 4.

Zur Saugseite 14 wird das Gehäuse des Schubumluftventils 1 durch ein Abschlussorgan 42 abgeschlossen, dass mit dem Gehäuse 16 verklemmt ist und das Elektromagnetventilgehäuse 28 in Axialrichtung fixiert. Es ist aber auch möglich, anstatt der Klemmverbindung eine Schweiß-, Löt- oder sonstige lösbare oder unlösbare Verbindung vorzunehmen. Außerdem weist das Abschlussorgan 42 noch weitere Öffnungen 44 auf, über die der Steuerdruckraum 24 bei geöffnetem zweitem Ventilverschlusskörper 26 über die Steueröffnung 38 mit der Saugseite 14 verbunden ist.

Das erfindungsgemäße Schubumluftventil 1 funktioniert nun wie folgt:
Bei Bestromung des Elektromagnetventils 4 wird der Anker 24 gegen die Schließrichtung des zweiten Federorgans 27 bewogen und somit die Steueröffnung 38 frei gegeben. Das im Steuerdruckraum 24 vorhandene Gas tritt aus, da der Druck im Steuerdruckraum 24 höher ist als auf der Saugseite 14 der Aufladeeinrichtung. Gleichzeitig ist die Menge über die Ausgleichsöffnung 36 einströmenden Gases aufgrund des geringeren Querschnitts kleiner, so dass ein Druckabbau im Steuerdruckraum 24 stattfindet, wodurch ein Druckgefälle am ersten Ventilverschlusskörper 10 auftritt, das zu einer resultierenden Kraft am Ventilverschlusskörper 10 in Öffnungsrichtung des Bypassventils 2 führt. Entsprechend wird der Ventilverschlusskörper 10 vom Ventilsitz 34 abgehoben und das Bypassventil 2 öffnet.

Verschiebt sich nun im Folgenden die Druckdifferenz zwischen der Druckseite 12 und der Saugseite 14 im Rezirkulationskanal 8 in Richtung eines Druckausgleichs, sinkt also das Druckgefälle im Kanal 8, verringert sich auch der Druck im Steuerdruckraum 24, da über die Öffnung 36 Gas geringeren Druckes einströmt. Es bleibt jedoch im geöffneten Zustand des Elektromagnetventils 4 immer aufgrund der unterschiedlichen Querschnitte der Ausgleichsöffnung 36 und der Steueröffnung 38 ein Druckgefälle vorhanden, welches sicherstellt, dass das Bypassventil 2 nicht ungewollt schließt.

Wird das Elektromganetventil 1 wieder geschlossen, so erfolgt ein Druckausgleich zwischen der Unterseite des ersten Ventilverschlusskörpers 10 und dem Steuerdruckraum 24. Daraus folgt ein pneumatischer Druckausgleich und somit eine Kraftausgeglichenheit bezüglich der pneumatischen Kräfte. Dies hat zur Folge, dass das Bypassventil 2 aufgrund der Kraft des ersten Federorgans 28 geschlossen wird. Dieser Zustand der Druckausgeglichenheit bleibt bestehen bis die Steueröffnung 38 durch das Elektromagnetventil 4 wieder geöffnet wird.

Es sei darauf hingewiesen, daß auch andere Ausführungsformen des Schubumluftventils 1 denkbar sind, ohne den Schutzbereich des Hauptanspruchs zu verlassen. Insbesondere kann die Steueröffnung 38 auch mit der Atmosphäre verbunden sein.

## Patentansprüche

1. Schubumluftventil (1) für Verbrennungskraftmaschinen,
welche in einem Bypasskanal (8) zwischen der Druckseite (12) und der Saugseite (14) einer Aufladeeinrichtung angeordnet ist, das ein Gehäuse (16) aufweist,
mit einem Bypassventil (2), das einen pneumatisch betätigbaren ersten Ventilverschlusskörper (10) aufweist, der in Schließrichtung durch eine Federkraft vorgespannt ist,
mit einem Steuerdruckraum (24), der über eine ständig geöffnete Ausgleichsöffnung (36) im geschlossenem Zustand des Bypassventils (2) mit der Druckseite (12) verbunden ist, und
mit einem Elektromagnetventil (4), das einen Spulenkörper(20), eine Rückschlussanordnung (22) und einen, ebenfalls in Schließrichtung vorgespannten Anker (24) und einen damit zusammenwirkenden, zweiten Ventilverschlusskörper (26) für mindestens eine Steueröffnung (38) aufweist, wobei der Gesamtquerschnitt der Steueröffnung/en (38) größer als der Querschnitt der Ausgleichsöffnung (36) ist, wobei der Steuerdruckraum (24) bei geöffnetem zweiten Ventilverschlussglied (26) über die Steueröffnung (38) mit der Saugseite (14) verbunden ist, wobei durch Bestromen des Elektromagnetventils (4) während des Öffnungsvorgangs des Bypassventils (2) eine fluidische Verbindung zwischen der Druckseite (12) und der Saugseite (14) der Aufladeeinrichtung oder der Atmosphäre über den Steuerdruckraum (24) herstellbar ist,
**dadurch gekennzeichnet, dass**
ein erstes Federorgan (18) für den ersten Ventilverschlusskörper (10) und ein zweites Federorgan für den zweiten Ventilverschlusskörper vorgesehen sind, wobei die mindestens eine Steueröffnung (38) an der der Ausgleichsöffnung (36) gegenüber gelegenen Seite des Elektromagnetventils (4) angeordnet ist, derart, dass im vollständig geöffneten Zustand des Bypassventils (2) zumindest zeitweise eine fluidische Verbindung zwischen der Druckseite (12) und der Saugseite (14) der Aufladeeinrichtung über den Steuerdruckraum (24) besteht, wobei ein Verschluss der fluidischen Verbindung eine resultierende Kraft in Schließrichtung des Ventilverschlasskörpers (10) bewirkt.

2. Schubumluftventil nach Anspruch 1, **dadurch gekennzeichnet, dass** der Spulenkörper (20) die Steueröffnung (38) aufweist.

3. Schubumluftventil nach Anspruch 1 oder 2, **dadurch gekennzeichnet, dass** das zweite Federorgan (27) sich an der Rückschlussanordnung (22) abstützt.

4. Schubumluftventil nach einem der Ansprüche 1 - 3,
**dadurch gekennzeichnet, dass** der Anker (24) als im Wesentlichen einseitig offener Zylinder ausgebildet ist, an dessen Grundfläche (25) der zweite Ventilverschlusskörper (26) ausgebildet ist.

5. Schubumluftventil nach einem der vorhergehenden Ansprüche,
**dadurch gekennzeichnet, dass**
ein Elektromagnetventilgehäuse (28) mit einem Befestigungsorgan (30) vorgesehen ist, dass im Gehäuse (16) abgedichtet angeordnet ist.

6. Schubumluftventil nach Anspruch 5,
**dadurch gekennzeichnet, dass**
das Elektromagnetventilgehäuse (28) mittels des Befestigungsorgans (30) verklemmt ist.

7. Schubumluftventil nach Anspruch 5 oder 6,
**dadurch gekennzeichnet, dass**
das erste Federorgan (18) am Befestigungsorgan (30) abgestützt ist.

8. Schubumluftventil nach einem der Ansprüche 5 - 7,
**dadurch gekennzeichnet, dass**
das Gehäuse (16) ein Abschlussorgan (42) aufweist, dass das Elektromagnetventilgehäuse (4) in Axialrichtung fixiert.

## Claims

1. A divert air valve (1) for internal combustion engines,
which is arranged in a bypass channel (8) between a pressure side (12) and a suction side (14) of a supercharging device, the divert air valve comprising a housing (16),
with a bypass valve (2) comprising a first valve closure body (10) which is configured to be pneumatically actuable and to be biased in a closing direction by a first spring element,
with a control pressure chamber (24) which, in the closed state of the bypass valve (2), is connected with the pressure side (12) through a compensation opening (36) which is configured to be permanently open; and
with a solenoid valve (4) comprising a coil body (20), a magnetic yoke arrangement (22), and an armature (24) also configured to be biased in the closing direction, and a second valve closure body (26) for at least one control opening (38), the second valve closure body being configured to cooperate with the armature, wherein an overall cross section of the control opening/-s (38) is larger than a cross section of the compensation opening (36), wherein, when the second valve closure body (26) is open, the control pressure chamber (24) is connected with the suction side (14) via the control opening (38), wherein, when the solenoid valve (4) is in an energized state as the bypass valve (2) is opened, a fluidic communication can be established between the pressure side (12) and the suction side (14) of the supercharging device or the atmosphere through the control pressure chamber (24),
**characterized in that** a first spring element (18) is provided for the first valve closure body (10) and a second spring element is provided for the second valve closure body, wherein the at least one control opening (38) is arranged at the side of the solenoid valve (4) opposite the compensation opening (36) such that, when the bypass valve (2) is fully open, a fluidic communication exists at least temporarily between the pressure side (12) and the suction side (14) of the supercharging device via the control pressure chamber (24), wherein a closing of the fluidic communication causes a resultant force in a closing direction of the valve closure body (10).

2. The divert air valve as recited in claim 1, wherein the coil body (20) comprises the control opening (38).

3. The divert air valve as recited in claim 1 or 2, wherein the second spring element (27) is supported at the magnetic yoke arrangement (22).

4. The divert air valve as recited in one of claims 1-3, wherein the armature (24) is provided substantially as a cylinder which is open on one side, wherein the second valve closure body (26) is formed at the base (25) thereof.

5. The divert air valve of one of the preceding claims, wherein a solenoid valve housing (28) comprising a fastening element (30) is provided, the solenoid valve housing being arranged in the housing (16) so as to be sealed.

6. The divert air valve as recited in claim 5, wherein the solenoid valve housing (28) is clamped by the fastening element (30).

7. The divert air valve as recited in claim 5 or 6, wherein the first spring element (18) is configured to be supported on the fastening element (30).

8. The divert air valve as recited in one of claims 5-7, wherein the housing (16) comprises a termination element (42) configured to fix the solenoid valve housing (4) in an axial direction.

## Revendications

1. Vanne de dérivation d'air (1) pour moteurs à combustion interne,
disposée dans un canal de bypass (8) entre le côté pression (12) et le côté aspiration (14) d'un moyen chargeur, comprenant un carter (16),
avec une vanne de bypass (2) comprenant un premier corps de fermeture de vanne (10) qui peut être actionné pneumatiquement, ledit corps étant précontraint vers la direction de fermeture par une force élastique,
avec une chambre de pression de commande (24), qui, dans l'état fermé de la vanne de bypass (2), est reliée au côté pression (12) par une ouverture de compensation (36) constamment ouverte, et
avec une vanne électromagnétique (4) comprenant un corps de bobine (20), un ensemble de retour de flux (22) et une armature (24) aussi précontrainte vers la position de fermeture et un deuxième corps de fermeture de vanne (26) pour au moins une ouverture de commande (38), ledit deuxième corps coopérant avec celle-ci, la section transversale totale de la/les ouverture/-s de commande (38) étant plus grande que la section transversale de l'ouverture de compensation (36), ladite chambre de pression de commande (24) étant reliée au côté aspiration (14) par l'ouverture de commande (38) en état ouvert du deuxième élément de fermeture de vanne (26), où, par l'alimentation de la vanne électromagnétique (4) en électricité pendant le procès d'ouverture de la vanne de bypass (2), une communication fluidique entre le côté pression (12) et le côté admission (14) du moyen chargeur ou l'atmosphère peut être réalisée à travers la chambre de pression de commande (24),
**caractérisée en ce que**
un premier élément ressort (18) est prévu pour le premier corps de fermeture de vanne (10) et un deuxième élément ressort est prévu pour le deuxième corps de fermeture de vanne, où ladite au moins une ouverture de commande (38) est disposée sur le côté opposé à la vanne électromagnétique (4), de sorte que, dans l'état d'ouverture complète de la vanne de bypass (2), une communication fluidique existe au moins temporairement entre le côté pression (12) et le côté admission (14) du moyen chargeur à travers la chambre de pression de commande (24), où la fermeture de la communication fluidique effectue une force résultante dans la direction de fermeture du corps de fermeture de vanne (10).

2. Vanne de dérivation d'air selon la revendication 1, **caractérisée en ce que** le corps de bobine (20) présent l'ouverture de commande (38).

3. Vanne de dérivation d'air selon la revendication 1 ou 2, **caractérisée en ce que** le deuxième élément ressort (27) s'appuie sur l'ensemble de retour de flux (22).

4. Vanne de dérivation d'air selon l'une quelconque des revendications 1 - 3, **caractérisée en ce que** l'armature (24) est réalisée sous forme d'un cylindre sensiblement ouvert sur un côté, sur la face de base (25) duquel est formé le deuxième corps de fermeture de vanne (26).

5. Vanne de dérivation d'air selon l'une quelconque des revendications précédentes, **caractérisée en ce qu'**un carter (28) de la vanne électromagnétique avec un élément de fixation (30) est prévu, qui est disposé de manière scellée dans le carter (16).

6. Vanne de dérivation d'air selon la revendication 5, **caractérisée en ce que** le carter (28) de la vanne électromagnétique est coincé à l'aide de l'élément de fixation (30).

7. Vanne de dérivation d'air selon la revendication 5 ou 6, **caractérisée en ce que** le premier élément ressort (18) s'appuie sur l'élément de fixation (30).

8. Vanne de dérivation d'air selon l'une quelconque des revendications 5 - 7,
**caractérisée en ce que** le carter (16) comprend un élément terminal (42) qui fixe la vanne électromagnétique (4) dans la direction axiale.
